# EUROPEAN PATENT SPECIFICATION

(11) **EP 1 260 431 B1**
(45) Date of publication and mention of the grant of the patent: **24.12.2008**
(21) Application number: 02007920.8
(22) Date of filing: 09.04.2002
(51) Int. Cl.: B62K 21/08

(54) **Vehicle having a steering damper system**
Fahrzeug mit einem Lenkungsdämpfer
Véhicule avec un amortisseur de direction

(30) Priority: 25.05.2001 JP 2001157068
(43) Date of publication of application: 27.11.2002
(73) Proprietor: HONDA GIKEN KOGYO KABUSHIKI KAISHA, Minato-ku, Tokyo (JP)
(72) Inventor: Hasegawa, Yosuke c/o Kabushiki Kaisha Honda Gijutsu Kenkyusho, Saitama (JP); Itabashi, Takeyasu c/o Kabushiki Kaisha Honda Gijutsu Kenkyusho, Saitama (JP); Hayashi, Kanji c/o Kabushiki Kaisha Honda Gijutsu Kenkyusho, Saitama (JP); Wakabayashi, Takeshi c/o Kabushiki Kaisha Honda Gijutsu Kenkyusho, Saitama (JP); Bunya, Osamu c/o Kabushiki Kaisha Honda Gijutsu Kenkyusho, Saitama (JP); Harada, Tomoyuki c/o Kabushiki Kaisha honda Gijutsu Kenkyusho, Saitama (JP)
(74) Representative: Liska, Horst

(56) References cited:
- EP-A- 0 900 722
- DE-A- 2 710 651

## Description

The present invention relates to a vehicle having a steering damper system, said steering damper system being provided for generating a damping force to restrain shaking of the steering system at the time of disturbance, and more specifically, to a vehicle having a steering damper system in which a damping force is adjustable.

A vehicle having a steering damper system according to the preamble of claim 1 is known from EP 0 900 722 A2.

A further steering damper system which generates a damping force for the shaking of the steering system in order to prevent the shaking of the steering system by kickback or the like at the time of disturbance is known (for example, JP 2593461). A steering damper system in which a damping force can be adjusted in such a manner that a damping force is generated only when needed and no extra damping force is generated in other cases is also known. For example there is the system that controls the damping force based on the steering angle and the traveling speed (Japanese Patent Laid-Open No. 64888/1988), and the system that controls the damping force based on the variation of the load exerted on the front wheel (Japanese Patent Publication No. 74023/1995).

The steering damper of the aforementioned related art is a relatively heavy part, and when it is disposed in the steering system, inertia at the time of turnaround increases by the extent corresponding to the weight of the steering damper added thereto. However, in the steering system, it is desired to avert increase in inertia and to provide the same inertia as those without steering damper, and as regards the installing space, to provide an installation structure for the damper that does not impair the appearance of the vehicle body while maintaining enough operating space for the damper corresponding to the extent of steering operation. Since the steering damper mounted in the steering system may be difficult to do maintenance, it is also desired to facilitate maintenance of the steering damper.

It is an object of the invention to provide a vehicle having a steering damper system which provides a uniform damping behaviour.

This object is achieved by a vehicle having a steering damper system according to claim 1.

The vehicle comprises a pair of left and right mainframes being branched to the left and right from the head pipe located at the front end so as to extend rearward along the vehicle body, and a steering system for steering a front wheel rotatably supported on the head pipe, wherein the steering system is provided with a steering damper providing a damping force to the steering system, wherein the pair of left and right mainframes are connected by a cross member in the vicinity of the head pipe, and wherein the steering damper is disposed on the cross member, and the operating section of the steering damper and the steering system are connected by a connecting member.

According to this, the space of installing the steering damper may be established in the vicinity of head pipe by connecting the pair of left and right mainframes by a cross member in the vicinity of the head pipe, and thus a damping force for the turnaround operation of the steering system may be generated by the steering damper disposed on the cross member via the connecting member. Therefore, inertia occurring at the time of steering may be maintained at the same level as the related art because the steering damper, which is a heavy part, does not have to be disposed in the steering system, and the good appearance may be maintained because the operating space for the damper may be established in the space between the left and right mainframes.

Preferably, the cross member is detachably secured on the pair of left and right mainframes.

According to this, since the cross member is detachably secured on the pair of left and right mainframes, the cross member may be removed together with the steering damper. Therefore, the maintenance work in a small space is not obliged, and thus maintenance of the steering damper is facilitated.

Preferably, the cross member is secured on or under the pair of left and right mainframes.

According to this, since the cross member is secured on or under the pair of left and right mainframes, the steering damper and the cross member may be attached and detached from above or from below the vehicle body, and thus maintenance of the steering damper is further facilitated.

Preferred embodiments of the present invention will be described hereinunder with reference to the accompanying drawings, in which:
Fig. 1 is a schematic perspective view of the motorcycle to which the present invention is applied.
Fig. 2 is a partially exploded side view of the front portion of the vehicle body according to the present invention.
Fig. 3 is a plan view of the same part.
Fig. 4 is a drawing showing a schematic structure of the steering damper.
Fig. 5 is a drawing of the second embodiment corresponding to Fig. 2.

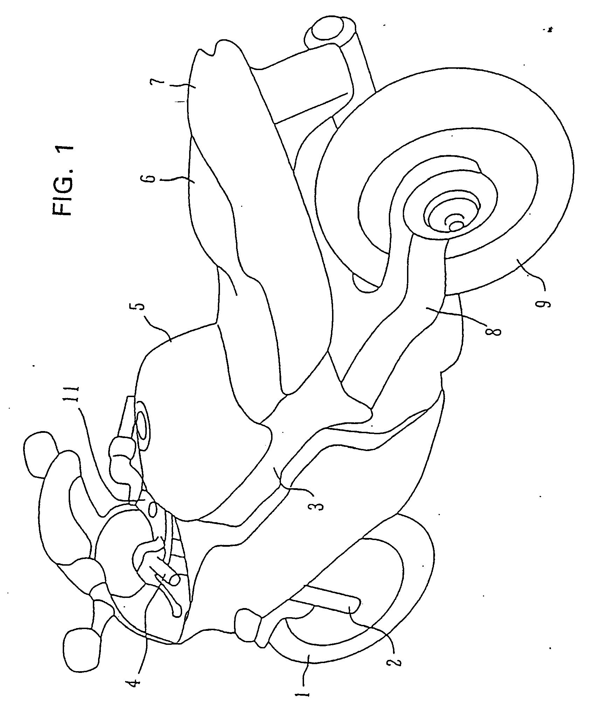

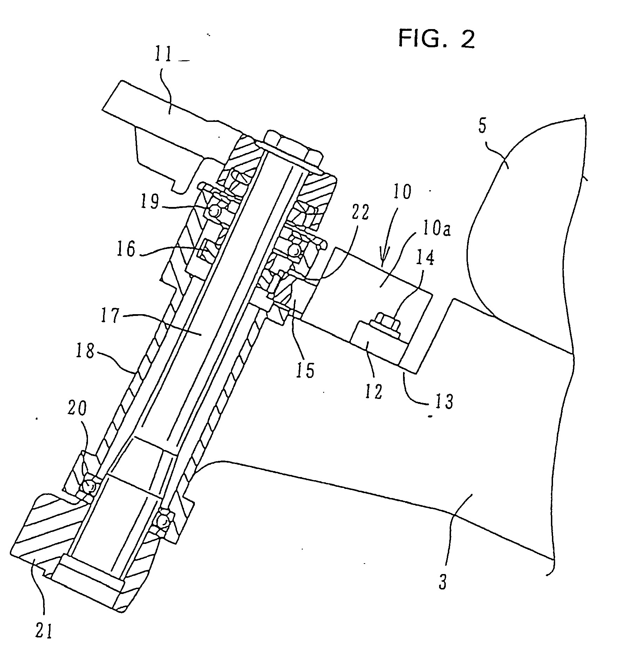

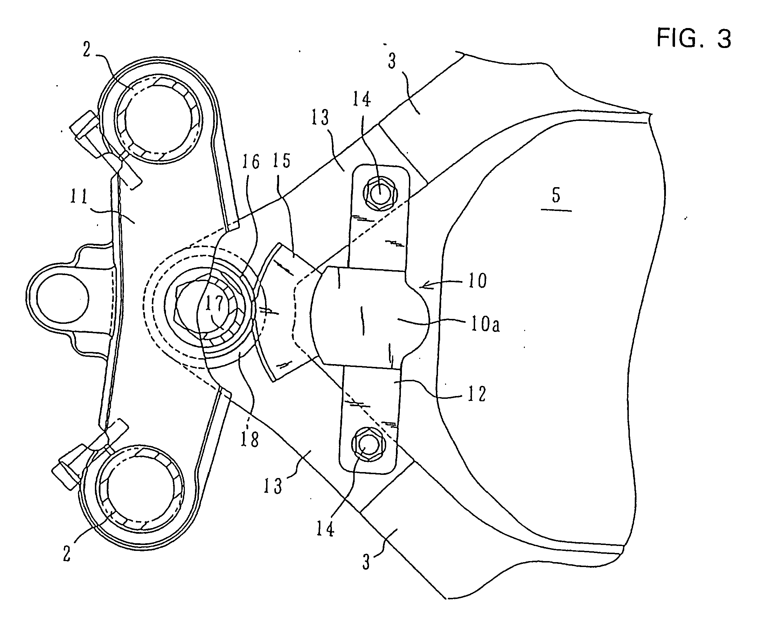

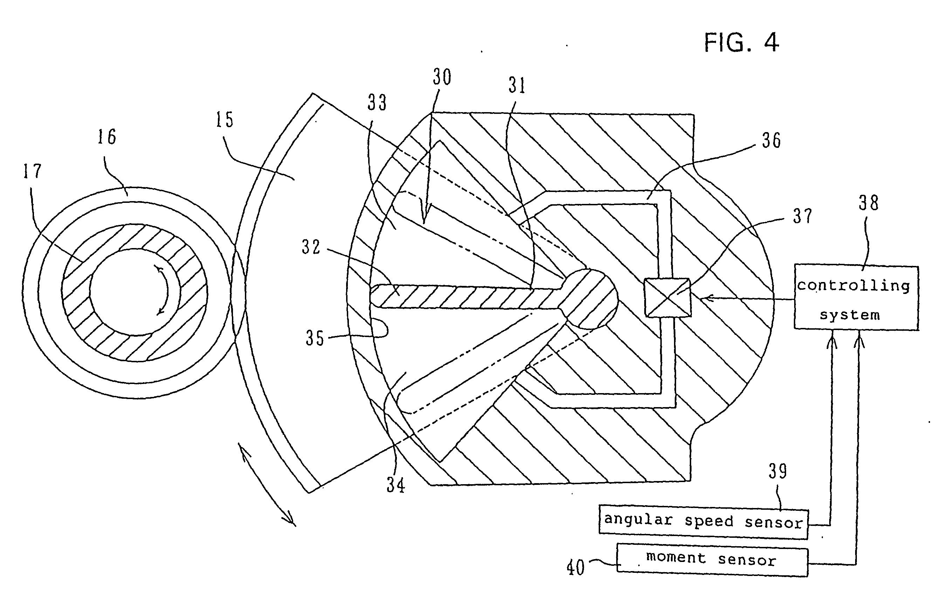

Referring now to the drawings, the first embodiment will be described. Fig. 1 is a schematic perspective view of the motorcycle to which the present invention is applied; Fig. 2 is a partially exploded side view of the front portion of the vehicle body; Fig. 3 is a plan view of the same part; and Fig. 4 is a drawing showing a schematic structure of the steering damper.

In Fig. 1, the upper portion of a front fork 2 supporting a front wheel 1 at the lower end thereof is connected to the front portion of a vehicle body frame 3, and is rotatable by a handle 4. A fuel tank 5 is supported on the vehicle body frame 3. The reference numeral 6 designates a seat, the numeral 7 designates a rear cowl, the numeral 8 designates a rear swing arm, and the numeral 9 designates a rear wheel.

The steering damper will be described below. As shown in Figs. 2 and 3, the steering damper 10 is disposed at the central portion of a cross member 12 laid between the front portions of the mainframes 3, 3 branched to the left and right in the vicinity of the upper bracket 11 on which the handle (not shown) is mounted.

In this embodiment, a housing 10a for accommodating the operating portion of the steering damper 10 and the cross member 12 are integrally formed of cast metal or the like, the cross member 12 is formed into a plate shape laterally extending from the housing 10a, and the respective ends of the extended portion are secured to the stepped recesses 13 formed on the upper portion of the mainframe 3 with bolts 14 from above the vehicle body. The cross member 12 also serves as a reinforcing member at the front portion of the mainframe 3.

At the front portion of the steering damper 10, there is provided a sector gear 15 projecting from the housing 10a forwardly of the vehicle body, which engages the drive gear 16. The drive gear 16 is integrally mounted around the upper portion of a steering stem 17, and the steering stem 17 passes through the head pipe 18 in the vertical direction, and is rotatably supported by the bearings 19, 20 at the top and bottom of the head pipe 18.

The upper and lower ends of the steering stem 17 is secured to the upper bracket 11 and the lower bracket 21 located at the upper and lower ends of the head pipe 18. The lower bracket 21 is placed substantially in parallel with the upper bracket 11, and supports the front fork 2 together with the upper bracket 11.

Therefore, the handle 4, the upper bracket 11, the steering stem 17, the lower bracket 21, and the front fork 2 constitute a steering system, so that when the handle 4 is turned, the upper bracket 11, the steering stem 17, the lower bracket 21 and the front fork 2 turn integrally to steer the front wheel 1. At this moment, the drive gear 16 also turns integrally with the steering stem 17.

The head pipe 18 is a tubular member connecting the front end portions of the left and right mainframes 3, 3 with each other to constitute the front end portion of the vehicle body frame, and is formed with a opening 22 at the location corresponding to the drive gear 16, through which the teeth of the sector gear 15 inserted into the head pipe 18 engage the drive gear 16.

Fig. 4 illustrates a structure of the steering damper 10 schematically, showing that a fan-shaped liquid chamber 30 fanning out toward the front is provided within the steering damper 10, and a shaft 31 is rotatably provided at the position corresponding to the linchpin of the fan. The portion of the sector gear 15 located within the housing 10a corresponding to the linchpin of the fan is connected to the shaft 31, so that the sector gear 15 and the shaft 31 rotates as a single unit. The shaft 31 is also provided integrally with a wing-shaped portion 32 extending forward for dividing the liquid chamber 30, and the wing-shaped portion 32 divides the inside of the liquid chamber 30 into two chambers; the right liquid chamber 33 and the left liquid chamber 34.

The tip of the wing-shaped portion 32 is formed with a sliding surface, and is brought into sliding contact with the inner surface of the arc-shaped wall 35 of the liquid chamber 30. The right liquid chamber 33 and the left liquid chamber 34 are filled with uncompressible liquid such as oil or the like and connected by a by-pass channel 36. An adjustable valve 37 is provided at the central portion of the by-pass channel 36. The adjustable valve 37 comprises a throttling passage for generating a damping force, and throttle may be varied by changing the sectional area of the throttling passage. However, the adjustable valve 37 employed here is not limited to the type described above, and various types of known adjustable valve may be employed.

By constructing the steering damper system comprising the steering damper 10 in the manner described above, when the steering stem 17 is turned at the time of turnaround, the integrally turning drive gear 16 turns the sector gear 15, and the sector gear 15 in turn turns the shaft 31 integrally. As a consequent, the wing-shaped portion32 is turned in the liquid chamber 30 integrally with the shaft 31, and moves as shown in phantom to vary the volume balance between the right liquid chamber 33 and the left liquid chamber 34. Liquid moves the by-pass channel 36 in accordance with variations in volume balance.

Accordingly, when the prescribed conditions such as disturbance or the like are met and the adjustable valve 37 is throttled, movement of liquid in the by-pass channel 36 generates a damping force and restrains turning of the shaft 31, and further restrains turning of steering stem 17 via the sector gear 15 and the drive gear 16, whereby controlling sudden turnaround. Under the normal condition, the adjustable valve 37 is not throttled and thus enables free movement of liquid in the by-pass channel 36 and smooth turnaround.

Throttle of the adjustable valve 37 is controlled by a controlling system 38. The controlling system 38 is constructed of a microcomputer or the like, and in this embodiment, it controls based on the detected signals of the angular speed sensor 39 and a moment sensor 40. In other words, the value of the angular speed and the rotated direction of the steering stem 17 are obtained by the angular speed detected by the angular speed sensor 39, then the direction of rotating torque applied on the steering stem 17 from the moment detected by the moment sensor 40 is detected, and when these values meet the prescribed conditions, the throttle of the adjustable valve 37 is varied to adjust the damping force to control turning of the steering system 17 at the time of kickback. However, the elements employed by the controlling system 38 as base elements of control are not limited thereto, and various known elements such as a speed of travel or a load on the front wheel as in the aforementioned related art may be employed.

The operation of this embodiment will now be described. As is clear in Figs. 2 and 3, the steering damper 10 is located at the midsection of the cross member 12 provided between the left and right mainframe 3, 3, and disposed outside the steering system, but not in the steering system. Therefore, when mounting the steering damper 10, changes which should be made to the steering system are only to provide a drive gear 16 around the steering stem 17 and to form an opening 22 on the head pipe 18.

Therefore, even when the steering damper 10 is mounted, little weight is increased with respect to the steering system of the related art. Therefore, since inertia of the steering system changes little even when the steering damper 10 is mounted, the same operationality as the steering system without the steering damper mounted thereon may be maintained.

In order to perform maintenance of steering damper 10, the cross member 12 must simply be detached from the mainframes 3, 3 by removing the bolts 14, whereby the steering damper 10 and the cross member 12 can be removed together and thus maintenance can be performed separately from the vehicle body. Therefore, since maintenance in a small space is not obliged when performing maintenance, the maintenanceability may be improved.

In addition, since the cross member 10 is secured on the pair of left and right mainframes 3, 3, the steering damper 10 and the cross member 12 may be attached and detached from above the vehicle body, which further facilitates maintenance of the steering damper 10.

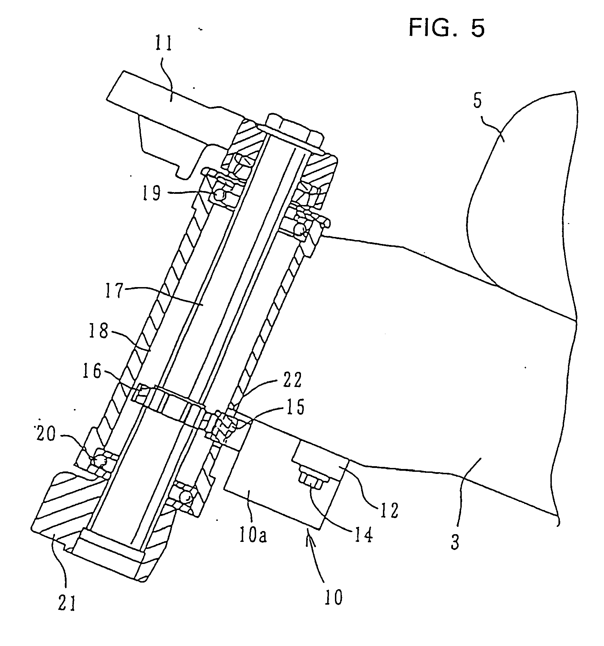

The second embodiment will now be described. The embodiment is characterized in that the mounting position of the steering damper 10 is inverted upside down, and other points are the same as the former embodiment. The common parts are only shown by the identical numerals, and will not be described below. Fig. 5 is a drawing corresponding to Fig. 2, in which the cross member 12 is mounted on the lower surfaces of the left and right mainframes 3, 3 from below the vehicle body, and the steering damper 10 is mounted on the cross member 12. Therefore, the drive gear 16 and the opening 22 are provided on the lower position of the steering stem 17 and the head pipe 18 respectively.

In this arrangement, since the space below the front portion of the mainframe 3 may be effectively utilized, the freedom of utilization of the space behind the head pipe 18 increases, and the steering damper 10 and the cross member 12 may be attached and detached from below the vehicle body, thereby facilitating maintenance of the steering damper 10 as in the case of the former embodiment. In addition, since the steering damper 10 cannot be seen from above, the good appearance may be maintained.

The present invention is not limited to the embodiments described so far, and various modifications or applications may be made within the principle of the invention as defined by the claims. For example, it is also possible to provide the housing 10a of the steering damper 10 and the cross member 12 separately and mount the housing 10a detachably to the cross member 12 with bolts or the like. In this case, when performing maintenance of the steering damper 10, either it may be removed together with the cross member 12 from the mainframe 3 as in the former embodiment, or only the steering damper 10 may be attached or detached for maintenance without detaching the cross member 12.

In summary it is an object to provide a steering damper without increasing inertia of the steering system.

To achieve this, a cross member 12 is laid between the front portions of the mainframes 3, 3 being branched to the left and right from the head pipe 18 so as to extend rearward, and a steering damper 10 is mounted at the center thereof. The sector gear 15 is projected frontward from the housing 10a, and the teeth thereof are inserted through the opening 22 formed on the head pipe 18, and are engaged with the drive gear 16 integrally mounted around the steering stem 17 rotatably supported within the head pipe 18.

## Claims

1. A vehicle having a steering damper system, said vehicle comprising a pair of left and right mainframes (3, 3) being branched to the left and right from a head pipe (18) located at the front end of the main frames (3, 3) so as to extend rearward along the vehicle body, and a steering system (4, 11, 17, 21, 2) for steering a front wheel (1) rotatably supported on the head pipe (18), wherein said steering system is provided with a steering damper (10) providing a damping force to the steering system (4, 11, 17, 21, 2), and wherein the pair of left and right mainframes (3, 3) are connected by a cross member (12) in the vicinity of the head pipe (18),
**characterized in that** the steering damper (10) is disposed on the cross member (12), and the operating section of the steering damper (10) is connected to a steering stem (17) of the steering system (4, 11, 17, 21, 2) by gears (15, 16) comprising a driving gear (16) integrally mounted around the steering stem (17) which passes through the head pipe (18) in the vertical direction, and a driven gear (15) connected to a shaft (31) of the steering damper (10), the shaft (31) being provided integrally with a wing-shaped portion (32) extending from the shaft (31) for dividing a fan-shaped liquid chamber (30) into two chambers (33, 34) connected by a by-pass channel (36) wherein an adjustable valve (37) for generating a damping force is provided at the central portion of the by-pass channel (36).

2. A vehicle having a steering damper system according to claim 1, wherein the steering damper (10) is adjustable and wherein the steering damper system provides a controlling system (38) which is adapted to adjust a damping force applied by the adjustable steering damper (10) to an appropriate value.

3. A vehicle having a steering damper system according to claim 1 or 2, **characterized in that** the cross member (12) is detachably secured on the pair of left and right mainframes (3, 3).

4. A vehicle having a steering damper system according to claim 3, **characterized in that** the cross member (12) is secured on or under the pair of left and right mainframes (3, 3).

## Patentansprüche

1. Fahrzeug mit einem Lenkungsdämpfersystem, wobei das Fahrzeug ein Paar von linken und rechten Hauptrahmen (3, 3), die von einem am Vorderende der Hauptrahmen (3, 3) angeordneten Kopfrohr (18) nach links und rechts abzweigen, sodass sie sich entlang dem Fahrzeugkörper nach hinten erstrecken, sowie ein Lenksystem (4, 11, 17, 21, 2) zum Lenken eines am Kopfrohr (18) drehbar gelagerten Vorderrads (1) aufweist, wobei das Lenksystem mit einem Lenkungsdämpfer (10) versehen ist, der auf das Lenksystem (4, 11, 17, 21, 2) eine Dämpfkraft ausübt, und worin das Paar der linken und rechten Hauptrahmen (3, 3) in der Nähe des Kopfrohrs (18) durch ein Querelement (12) verbunden ist,
**dadurch gekennzeichnet, dass** der Lenkungsdämpfer (10) an dem Querelement (12) angeordnet ist und der Betätigungsabschnitt des Lenkungsdämpfers (10) mit einer Lenksäule (17) des Lenksystems (4, 11, 17, 21, 2) durch Verzahnungen (15, 16) verbunden ist, die eine Antriebsverzahnung (16), die integral um die Lenksäule (17) herum angebracht ist, welche das Kopfrohr (18) in der vertikalen Richtung durchsetzt, sowie eine Abtriebsverzahnung (15), die mit einer Welle (31) des Lenkungsdämpfers (10) verbunden ist, aufweisen, wobei die Welle (31) integral mit einem flügelförmigen Abschnitt (32) versehen ist, der sich von der Welle (31) weg erstreckt, um eine fächerförmige Flüssigkeitskammer (30) in zwei Kammern (33, 34) zu unterteilen, die durch einen Bypasskanal (36) verbunden sind, wobei ein einstellbares Ventil (37) zum Erzeugen einer Dämpfkraft an dem mittleren Abschnitt des Bypasskanals (36) vorgesehen ist.

2. Fahrzeug mit einem Lenkungsdämpfersystem nach Anspruch 1, worin der Lenkungsdämpfer (10) einstellbar ist und worin das Lenkungsdämpfersystem ein Steuerungssytsem (38) vorsieht, welches dazu ausgelegt ist, eine von dem einstellbaren Lenkungsdämpfer (10) ausgeübte Dämpfkraft auf einen geeigneten Wert einzustellen.

3. Fahrzeug mit einem Lenkungsdämpfersystem nach Anspruch 1 oder 2, **dadurch gekennzeichnet, dass** das Querelement (12) an dem Paar von linken und rechten Hauptrahmen (3, 3) abnehmbar befestigt ist.

4. Fahrzeug mit einem Lenkungsdämpfersystem nach Anspruch 3, **dadurch gekennzeichnet, dass** das Querelement (12) an oder unter dem Paar von linken und rechten Hauptrahmen (3, 3) befestigt ist.

## Revendications

1. Véhicule muni d'un système amortisseur de direction, ledit véhicule comprenant une paire de châssis principaux gauche et droit (3, 3), se ramifiant vers la gauche et vers la droite depuis un tube de tête (18) situé à l'extrémité avant des châssis principaux (3, 3), de manière à s'étendre vers l'arrière, le long de la carrosserie de véhicule, et un système de direction (4, 11, 17, 21, 2) pour guider directionnellement une roue avant (1), supportée à pivotement sur le tube de tête (18), dans lequel ledit système de direction est muni d'un amortisseur de direction (10), fournissant une force d'amortissement au système de direction (4, 11, 17, 21, 2), et dans lequel la paire de châssis principaux gauche et droit (3, 3) sont connectés par un organe transversale (12), à proximité du tube de tête (18),
**caractérisé en ce que** l'amortisseur de direction (10) est disposé sur l'organe transversal (12), et la section fonctionnelle de l'amortisseur de direction (10) est connectée à une tige de direction (17) du système de direction (4, 11, 17, 21, 2), par des roues dentées (15, 16), comprenant une roue dentée menante (16), montée solidairement autour de la tige de direction (17) passant à travers le tube de tête (18) dans la direction verticale, et une roue menée (15), reliée à un arbre (31) de l'amortisseur de direction (10), l'arbre (31) étant muni, solidairement, d'une partie en forme d'aile (32), s'étendant en partant de l'arbre (31), pou diviser une chambre à liquide (30) en forme d'éventail en deux chambre (33, 34) reliées par un canal de dérivation (36), dans lequel une soupape ajustable (37), pour générer une force d'amortissement, est prévue au niveau de la partie centrale du canal de dérivation (36).

2. Véhicule muni d'un système amortisseur de direction selon la revendication 1, dans lequel l'amortisseur de direction (10) est ajustable, et dans lequel le système de direction à amortisseur fournit un système de commande (38) adapté pour ajuster à une valeur appropriée une force d'amortissement, à l'aide de l'amortisseur de direction (10) ajustable.

3. Véhicule muni d'un système amortisseur de direction selon la revendication 1 ou 2, **caractérisé en ce que** l'organe transversal (12) est fixé de façon désolidarisable sur la paire de châssis principaux gauche et droit (3, 3).

4. Véhicule muni d'un système amortisseur de direction selon la revendication 3, **caractérisé en ce que** l'organe transversal (12) est fixé au-dessus ou au-dessous de la paire de châssis principaux gauche et droit (3, 3).
